# EUROPEAN PATENT APPLICATION

(11) **EP 4 459 892 A1**
(43) Date of publication of application: **06.11.2024**
(21) Application number: 22923876.1
(22) Date of filing: 28.01.2022
(51) Int. Cl.: H04B 7/15, H04B 7/06

(54) **REPEATER CONTROL DEVICE, WIRELESS COMMUNICATION SYSTEM, CONTROL CIRCUIT, STORAGE MEDIUM, AND CONTROL VALUE DETERMINATION METHOD**

(71) Applicant: MITSUBISHI ELECTRIC CORPORATION, Chiyoda-ku Tokyo 100-8310 (JP)
(72) Inventor: YAMASHITA, Yasutaka, Tokyo 100-8310 (JP); HANGAI, Masatake, Tokyo 100-8310 (JP)
(74) Representative: Plasseraud IP
(86) International application number: PCT/JP2022/003378
(87) International publication number: WO 2023/145012

(57) **Abstract**

In a repeater control device (6) for controlling a communication repeater (2) that has a beamforming function and relays a wireless communication signal including communication data addressed from a transmission device (3) to a reception device (4), the repeater control device (6) includes: a parameter determination unit that determines a gain adjustment value for adjusting input power to an amplifier that amplifies the wireless communication signal relayed by the communication repeater (2), on the basis of an evaluation value indicating communication quality in the reception device (4) and calculated on the basis of: state information indicating a state of the communication repeater (2); a beam pattern requested when the communication repeater (2) transmits the wireless communication signal to the reception device (4); transmission path information indicating a state of a transmission path between the communication repeater (2) and the reception device (4); and reception device information indicating a state of the reception device (4).

## Description

### Field

The present disclosure relates to a repeater control device, a wireless communication system, a control circuit, a storage medium, and a control value determination method for controlling a communication repeater that relays a wireless communication signal including communication data addressed from a transmission device to a reception device.

### Background

In a communication repeater that has a beamforming function and relays a wireless communication signal including communication data addressed from a transmission device to a reception device, the wireless communication signal to be relayed is amplified using an amplifier and then transmitted toward the reception device. Here, in a case where a non-linear amplifier with high power efficiency is used, a back-off margin is set for amplification in a linear region of the amplifier for the purpose of causing distortion in a communication signal. By setting the back-off margin, a usable dynamic range of the amplifier is reduced. In a case where the back-off margin is set only on the basis of electrical characteristics of the amplifier alone, communication quality is degraded with an excessive back-off margin.

Patent Literature 1 discloses a multi-beam type relay communication system that reduces a back-off margin, by calculating a weight for beam formation so as to reduce peak-to-average power and multiplying the weight by a relay signal.

### Citation List

### Patent Literature

Patent Literature 1: International Publication No. 2020/158040

### Summary

### Technical Problem

However, according to the above-described conventional technique, there has been a problem that communication quality in a reception device that receives a relay signal is not necessarily improved.

The present disclosure has been made in view of the above, and an object thereof is to obtain a repeater control device capable of improving communication quality in a reception device that receives a relay signal.

### Solution to Problem

In order to solve the above-described problems and achieve the object, a repeater control device according to the present disclosure is a repeater control device for controlling a communication repeater that relays a wireless communication signal including communication data addressed from a transmission device to a reception device, the communication repeater having a beamforming function, the repeater control device includes: a parameter determination unit to determine a gain adjustment value for adjusting input power to an amplifier, the amplifier amplifying the wireless communication signal relayed by the communication repeater, based on an evaluation value indicating communication quality in the reception device and calculated based on: state information indicating a state of the communication repeater; a beam pattern requested when the communication repeater transmits the wireless communication signal to the reception device; transmission path information indicating a state of a transmission path between the communication repeater and the reception device; and reception device information indicating a state of the reception device.

### Advantageous Effects of Invention

A repeater control device according to the present disclosure has an effect of being able to improve communication quality in a reception device that receives a relay signal.

### Brief Description of Drawings

FIG. 1 is a diagram illustrating a configuration of a wireless communication system according to a first embodiment.
FIG. 2 is a sequence diagram for explaining an operation of the wireless communication system illustrated in FIG. 1.
FIG. 3 is a diagram illustrating a functional configuration of a communication repeater illustrated in FIG. 1.
FIG. 4 is a diagram illustrating an example of a functional configuration of a transmission unit illustrated in FIG. 3.
FIG. 5 is a diagram illustrating an example of a functional configuration of a repeater control device illustrated in FIG. 1.
FIG. 6 is a view illustrating an example of information included in a control value calculation request received by the repeater control device illustrated in FIG. 5.
FIG. 7 is a diagram illustrating an example of a specific configuration of a repeater control value generation unit illustrated in FIG. 5.
FIG. 8 is a view illustrating an example of amplifier characteristic information stored in a DB illustrated in FIG. 7.
FIG. 9 is a flowchart for explaining an operation of a parameter determination unit illustrated in FIG. 7.
FIG. 10 is a flowchart for explaining a specific example of a method for calculating an evaluation value by the parameter determination unit according to the first embodiment.
FIG. 11 is a graph for explaining an effect obtained by the wireless communication system illustrated in FIG. 1.
FIG. 12 is a diagram illustrating dedicated hardware for implementing each function of the wireless communication system illustrated in FIG. 1.
FIG. 13 is a diagram illustrating a hardware configuration for implementing each function of the wireless communication system illustrated in FIG. 1 by using a CPU.
FIG. 14 is a flowchart for explaining a specific example of a method for calculating an evaluation value by a parameter determination unit according to a second embodiment.
FIG. 15 is a diagram illustrating a configuration of a repeater control value generation unit according to a third embodiment.

### Description of Embodiments

Hereinafter, a repeater control device, a wireless communication system, a control circuit, a storage medium, and a control value determination method according to embodiments of the present disclosure will be described in detail with reference to the drawings.

### First Embodiment.

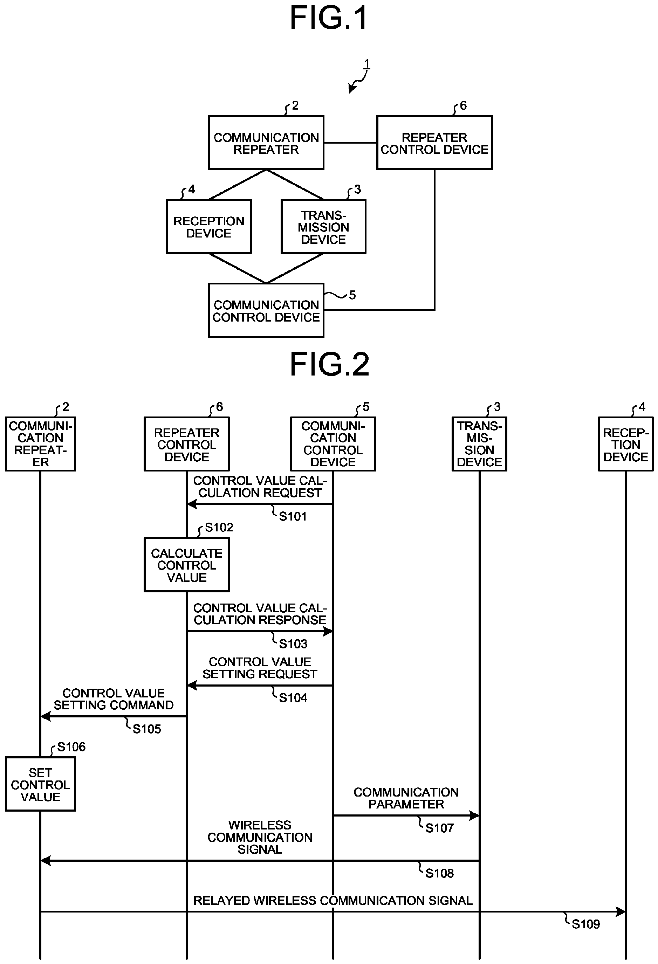

FIG. 1 is a diagram illustrating a configuration of a wireless communication system 1 according to a first embodiment. The wireless communication system 1 includes a communication repeater 2, a transmission device 3, a reception device 4, a communication control device 5, and a repeater control device 6. For example, the wireless communication system 1 may be a satellite communication system in which the communication repeater 2 is a communication satellite, the transmission device 3 may be a gateway, the reception device 4 may be a communication terminal, the communication control device 5 may be a network operation center (NOC), and the repeater control device 6 may be a communication satellite control device.

The communication repeater 2 relays a wireless communication signal including communication data addressed from the transmission device 3 as a transmission device to the reception device 4 as a reception device. The transmission device 3 transmits a wireless communication signal including communication data addressed to the reception device 4 to the communication repeater 2. The reception device 4 receives a wireless communication signal from the transmission device 3 via the communication repeater 2. The communication control device 5 is a device provided to operate and manage the wireless communication system 1, and has a function of monitoring a state of each device included in the wireless communication system 1 and controlling each device included in the wireless communication system 1. For example, the communication control device 5 can change settings of the transmission device 3 and the reception device 4, and can change settings of the communication repeater 2 via the repeater control device 6.

FIG. 2 is a sequence diagram for explaining an operation of the wireless communication system 1 illustrated in FIG. 1. The communication control device 5 transmits a control value calculation request to the repeater control device 6 (step S101). Upon receiving the control value calculation request from the communication control device 5, the repeater control device 6 calculates a control value in response to the control value calculation request (step S102). The repeater control device 6 transmits a control value calculation response including a calculation result to the communication control device 5 (step S103).

Upon receiving the control value calculation response, the communication control device 5 transmits a control value setting request including the control value to be set in the communication repeater 2, to the repeater control device 6 in response to the received control value calculation response (step S104). Upon receiving the control value setting request, the repeater control device 6 transmits a control value setting command, which is a command to set the control value of the communication repeater 2, to the communication repeater 2 in response to the received control value setting request (step S105). Upon receiving the control value setting command, the communication repeater 2 sets the control value on the basis of the received control value setting command (step S106) .

In addition, upon transmitting the control value setting request to the repeater control device 6, the communication control device 5 sets a communication parameter in the transmission device 3 (step S107). By using the set communication parameter, the transmission device 3 transmits, to the communication repeater 2, a wireless communication signal including communication data addressed to the reception device 4 (step S108). The communication repeater 2 transmits the relayed wireless communication signal to the reception device 4 (step S109).

As described above, in addition to the communication illustrated in FIG. 2, between the communication repeater 2 and the repeater control device 6, communication is performed such as telemetry to transmit state information including information obtained from various sensors installed on the communication repeater 2 to the repeater control device 6, and a command to transmit information to be used for navigation of the communication repeater 2 from the repeater control device 6 to the communication repeater 2.

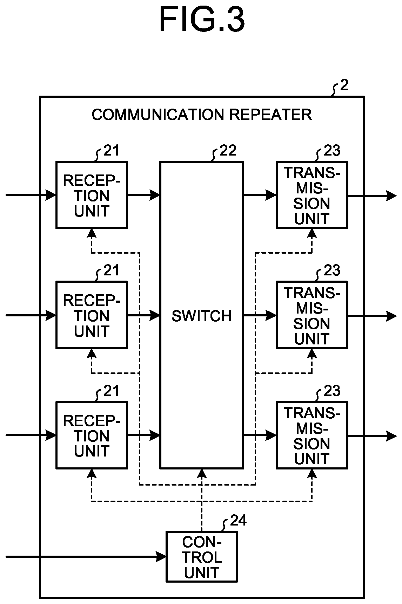

FIG. 3 is a diagram illustrating a functional configuration of the communication repeater 2 illustrated in FIG. 1. The communication repeater 2 includes a plurality of reception units 21, a switch 22, a plurality of transmission units 23, and a control unit 24. Each of the plurality of reception units 21 and each of the plurality of transmission units 23 have a beamforming function, and can control individual beam directions in different directions. The communication repeater 2 receives a wireless communication signal transmitted from the transmission device 3 by using the reception unit 21, and outputs, to the switch 22, a signal divided by a frequency as a result of demultiplexing. The switch 22 converts arrangement of the signals divided by the frequency, and outputs the signals to the transmission unit 23. The transmission unit 23 outputs and transmits the multiplexed signal to the reception device 4. The control unit 24 performs various settings of the reception unit 21, the switch 22, and the transmission unit 23. For example, the control unit 24 can set an excitation coefficient and a gain adjustment value, which are control values, on the basis of the control value setting command from the repeater control device 6.

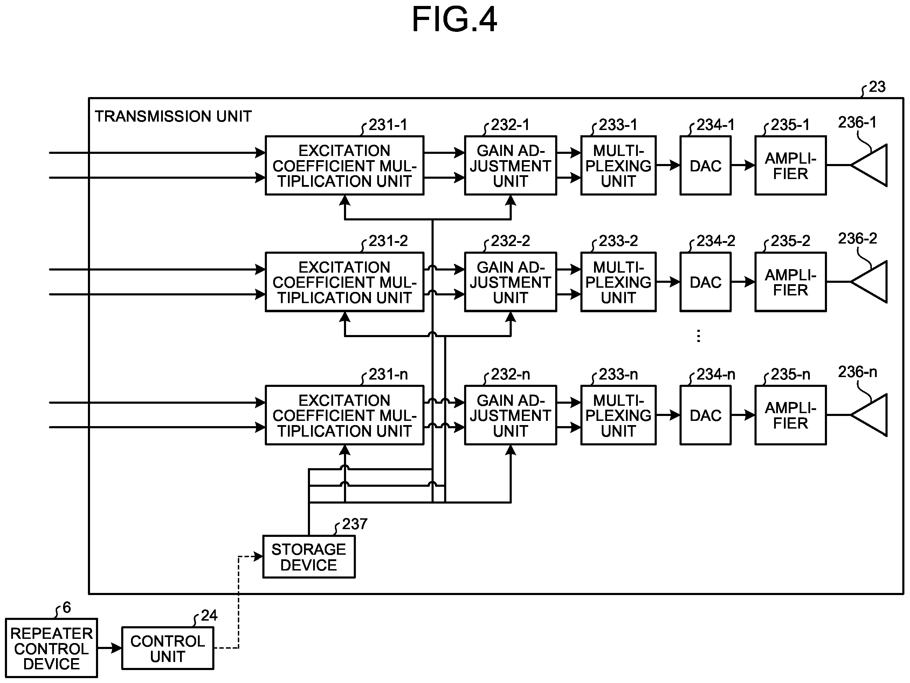

FIG. 4 is a diagram illustrating an example of a functional configuration of the transmission unit 23 illustrated in FIG. 3. The transmission unit 23 includes a plurality of excitation coefficient multiplication units 231-1 to 231-n, a plurality of gain adjustment units 232-1 to 232-n, a plurality of multiplexing units 233-1 to 233-n, a plurality of digital analog converters (DACs) 234-1 to 234-n, a plurality of amplifiers 235-1 to 235-n, a plurality of antenna elements 236-1 to 236-n, and a storage device 237. Note that, in the following description, in a case where it is not particularly necessary to distinguish each of a plurality of constituent elements having similar functions, only common reference numerals are given for description. For example, each of the excitation coefficient multiplication units 231-1 to 231-n is referred to as an excitation coefficient multiplication unit 231 when it is not necessary to distinguish from each other. The excitation coefficient multiplication unit 231, the gain adjustment unit 232, the multiplexing unit 233, the DAC 234, the amplifier 235, and the antenna element 236 are provided in n pieces of systems, and components of the individual systems are distinguished from each other by adding an identical numeral after a hyphen. Note that the transmission unit 23 copies an input signal to generate a signal for each antenna element 236, and inputs the generated signal to each of the excitation coefficient multiplication units 231-1 to 231-n.

The excitation coefficient multiplication unit 231 multiplies the input signal by an excitation coefficient and outputs the multiplied signal to the gain adjustment unit 232. The gain adjustment unit 232 adjusts input power to the amplifier 235 by multiplying the input signal by a gain adjustment value, and outputs the adjusted signal to the multiplexing unit 233. The multiplexing unit 233 converts a signal divided in a frequency domain into a time waveform, and outputs the converted signal to the DAC 234. The DAC 234 converts the input signal from a digital signal to an analog signal, and outputs the converted signal to the amplifier 235. The amplifier 235 amplifies the analog signal output from the DAC 234 and outputs the amplified signal to the antenna element 236. The antenna element 236 transmits the signal output from the amplifier 235. The storage device 237 receives, from the control unit 24, a gain adjustment value and an excitation coefficient, which are control values whose notification is provided from the repeater control device 6 to the communication repeater 2, and stores the gain adjustment value and the excitation coefficient. The storage device 237 provides the excitation coefficient to each of the excitation coefficient multiplication units 231-1 to 231-n, and provides the gain adjustment value to each of the gain adjustment units 232-1 to 232-n.

Although the excitation coefficient multiplication unit 231 and the gain adjustment unit 232 are different functional blocks here, a function of the gain adjustment unit 232 may be performed by the excitation coefficient multiplication unit 231, by including the adjustment of the input power by the gain adjustment value into the excitation coefficient.

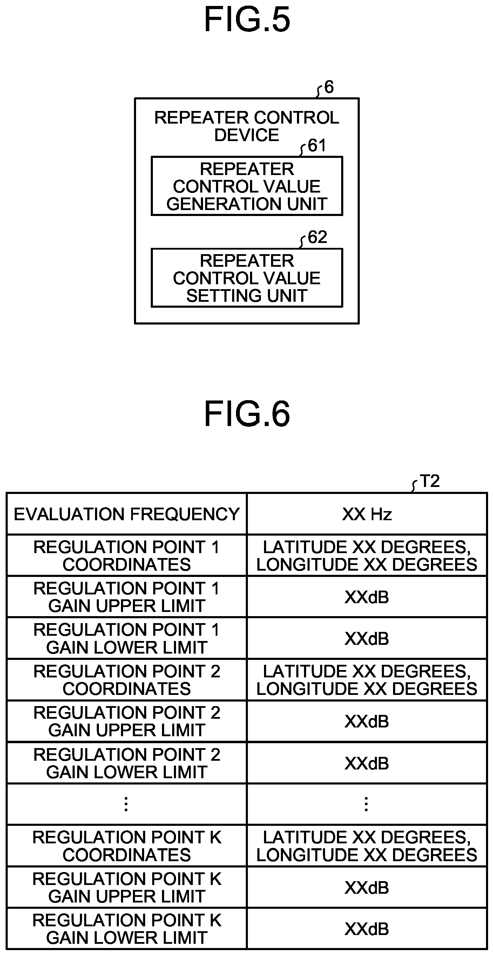

FIG. 5 is a diagram illustrating an example of a functional configuration of the repeater control device 6 illustrated in FIG. 1. The repeater control device 6 includes a repeater control value generation unit 61 and a repeater control value setting unit 62. The repeater control value generation unit 61 calculates a control value for controlling the repeater in response to the control value calculation request from the communication control device 5, and transmits the calculated control value as the control value calculation response to the communication control device 5. In response to the control value setting request from the communication control device 5, the repeater control value setting unit 62 transmits the control value setting command to instruct the communication repeater 2 to set the control value.

FIG. 6 is a view illustrating an example of information included in a control value calculation request T2 received by the repeater control device 6 illustrated in FIG. 5. The control value calculation request T2 includes an evaluation frequency and regulation point information. The evaluation frequency is a center frequency of a relay signal for calculating communication quality, and the evaluation frequency is used as an evaluation value. The regulation point information includes, for K pieces of regulation points, coordinates indicating positions of the regulation points, and upper and lower limits of gains at the regulation points. K is an integer of 1 or more.

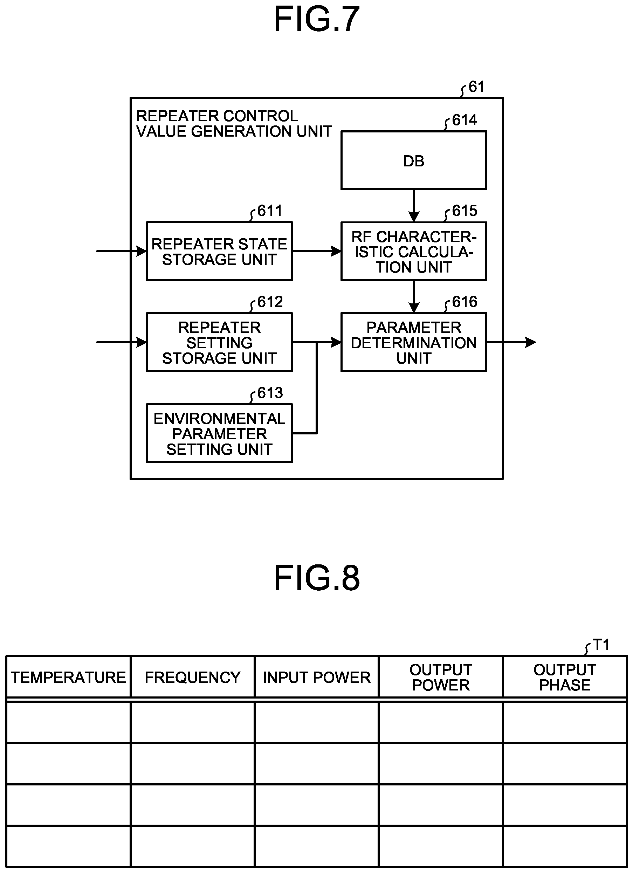

Here, a specific method in which the repeater control device 6 calculates a control value of the communication repeater 2 will be described. FIG. 7 is a diagram illustrating an example of a specific configuration of the repeater control value generation unit 61 illustrated in FIG. 5. The repeater control value generation unit 61 includes a repeater state storage unit 611, a repeater setting storage unit 612, an environmental parameter setting unit 613, a database (DB) 614, a radio frequency (RF) characteristic calculation unit 615, and a parameter determination unit 616.

The repeater state storage unit 611 stores state information acquired by the repeater control device 6 from the communication repeater 2, through communication called the telemetry described above. The repeater setting storage unit 612 stores information included in the control value calculation request transmitted from the communication control device 5. The environmental parameter setting unit 613 stores: transmission path information including rainfall information for each point and indicating a state of a transmission path between the communication repeater 2 and the reception device 4; and reception device information indicating a state of the reception device 4. The DB 614 stores amplifier characteristic information indicating characteristics of the amplifier 235 included in the communication repeater 2. The RF characteristic calculation unit 615 calculates an RF characteristic at the time point, on the basis of the amplifier characteristic information stored in the DB 614 and the state information stored in the repeater state storage unit 611, and outputs the calculated RF characteristic to the parameter determination unit 616. When the amplifier characteristic varies depending on the frequency, the RF characteristic calculation unit 615 acquires the amplifier characteristic information on the basis of the evaluation frequency stored in the repeater setting storage unit 612. The RF characteristic calculation unit 615 calculates, for example, an AM/AM characteristic indicating a relationship between input power and output power of the amplifier, and an AM/PM characteristic indicating a relationship between input power and an output phase of the amplifier. In a non-linear amplifier, the output power becomes linear, and the output phase does not change until the input power reaches a certain value. However, when the input power exceeds the certain value, the output power becomes non-linear, and the phase also shifts. Since these characteristics change in accordance with a frequency and a temperature, the RF characteristic calculation unit 615 calculates the RF characteristic on the basis of the evaluation frequency and the temperature.

FIG. 8 is a view illustrating an example of amplifier characteristic information T1 stored in the DB 614 illustrated in FIG. 7. The amplifier characteristic information T1 is created on the basis of, for example, a value measured in advance. In the amplifier characteristic information T1 illustrated in FIG. 8, the input power, the output power, and the output phase of the amplifier 235 are associated with the frequency and the temperature of the input signal.

The RF characteristic calculation unit 615 outputs, to the parameter determination unit 616, the RF characteristic including the output power and the output phase with respect to the input power for each frequency associated with the temperature at the time point of the communication repeater 2. In a case where the amplifier characteristic information T1 does not include data corresponding to the temperature at the time point, the RF characteristic calculation unit 615 may output the output power and the output phase corresponding to the temperature at the time point by performing interpolation, on the basis of data close to the temperature at the time point. The parameter determination unit 616 generates a control value of the communication repeater 2 on the basis of the RF characteristic output from the RF characteristic calculation unit 615, information included in the control value calculation request stored in the repeater setting storage unit 612, and information stored in the environmental parameter setting unit 613. In a case where the control value calculation request includes a position of the regulation point and an upper limit and a lower limit of the gain at the regulation point, the parameter determination unit 616 generates an excitation coefficient and a gain adjustment value, which are control values, such that the gain at the regulation point satisfies the upper limit and the lower limit of the gain included in the control value calculation request.

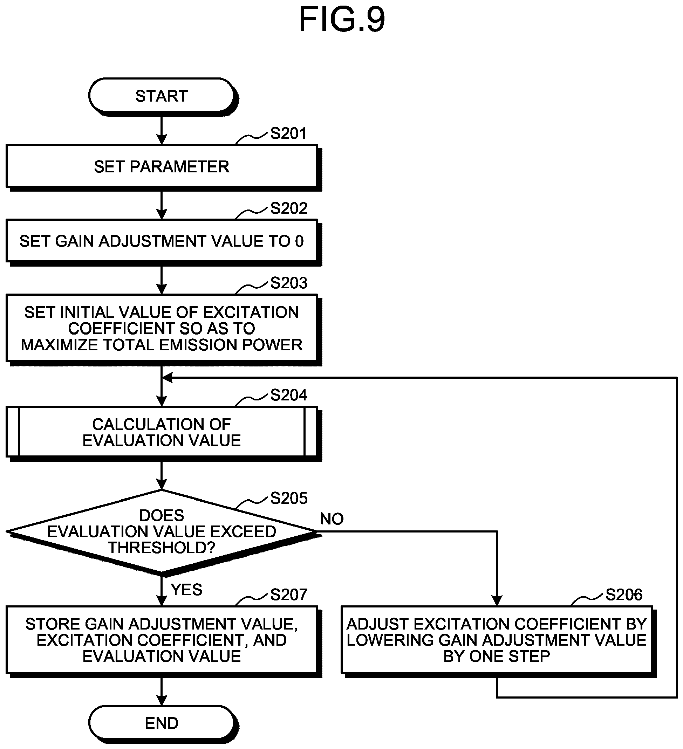

FIG. 9 is a flowchart for explaining an operation of the parameter determination unit 616 illustrated in FIG. 7. First, the parameter determination unit 616 sets regulation point information, frequency information, a modulation method, a threshold T_{q} of an evaluation value, and a terminal type, which are parameters for determining the gain adjustment value and the excitation coefficient (step S201). The parameter determination unit 616 sets the gain adjustment value to 0 (step S202).

The parameter determination unit 616 sets an initial value of the excitation coefficient for forming a beam toward the regulation point so as to maximize total emission power in a state where the gain adjustment value is 0 (step S203). Thereafter, the parameter determination unit 616 calculates an evaluation value indicating communication quality in the reception device 4 (step S204). The parameter determination unit 616 determines whether or not the evaluation value exceeds the predetermined threshold T_{q} (step S205). Here, it is assumed that a larger evaluation value indicates higher communication quality. When the evaluation value is equal to or less than the threshold T_{q} (step S205: No), the parameter determination unit 616 adjusts the gain adjustment value by lowering the gain adjustment value by one step, and adjusts the excitation coefficient such that the total emission power is maximized when the adjusted gain adjustment value is used (step S206).

The parameter determination unit 616 repeats the processing of steps S204 to S206. When the evaluation value exceeds the threshold T_{q} (step S205: Yes), the parameter determination unit 616 stores the gain adjustment value, the excitation coefficient, and the evaluation value at this time (step S207), and transmits the control value calculation response to the communication control device 5.

When the control value calculation request includes a plurality of pieces of regulation point information, the parameter determination unit 616 calculates an evaluation value for each regulation point, and repeats the processing of steps S204 to S206 until all the evaluation values exceed the threshold T_{q} in step S205.

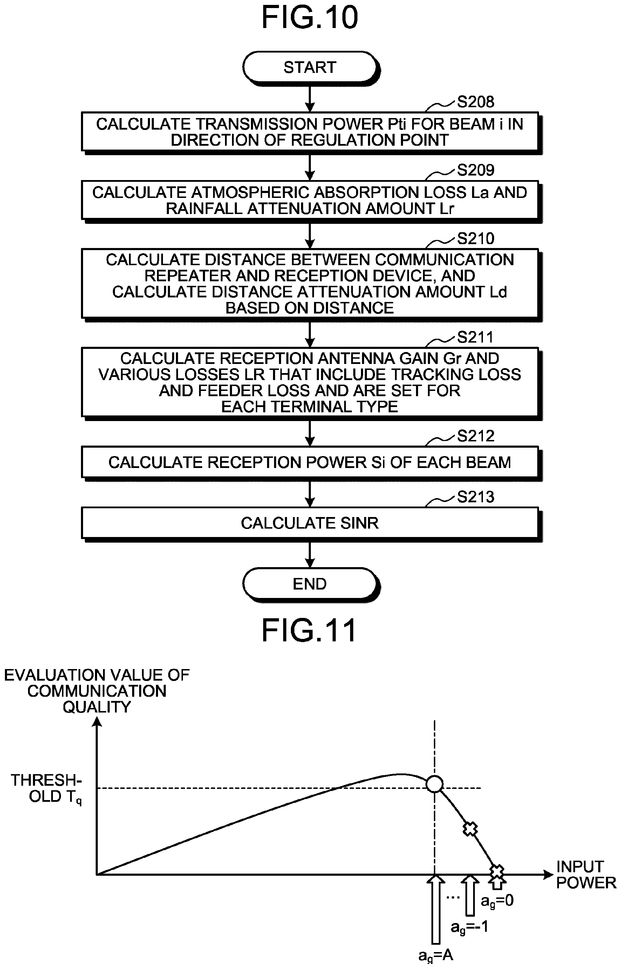

FIG. 10 is a flowchart for explaining a specific example of a method for calculating an evaluation value by the parameter determination unit 616 according to the first embodiment. The operation illustrated in FIG. 10 is a specific example of step S204 in FIG. 9, and illustrates a case where the evaluation value is a signal to interference and noise ratio (SINR).

Using the set excitation coefficient and gain adjustment value, the parameter determination unit 616 calculates transmission power Pti for a beam i in a direction of the regulation point, on the basis of a position of the communication repeater 2, a position of the regulation point, and an antenna orientation direction of the communication repeater 2 (step S208). The position information and the antenna orientation direction of the communication repeater 2 are included in, for example, the state information stored in the repeater state storage unit 611. The position of the regulation point is included in the control value calculation request, and the parameter determination unit 616 acquires the position information of the regulation point from the repeater setting storage unit 612.

Subsequently, the parameter determination unit 616 calculates an atmospheric absorption loss La and a rainfall attenuation amount Lr, on the basis of the transmission path information stored in the environmental parameter setting unit 613 (step S209). The parameter determination unit 616 calculates a distance between the communication repeater 2 and the reception device 4 on the basis of the position information of each of the communication repeater 2 and the reception device 4, and calculates a distance attenuation amount Ld on the basis of the calculated distance (step S210). The position information of the reception device 4 is included in, for example, the reception device information stored in the environmental parameter setting unit 613. The atmospheric absorption loss La and the rainfall attenuation amount Lr are included in the transmission path information stored by the environmental parameter setting unit 613, for example.

The parameter determination unit 616 calculates a reception antenna gain Gr and various losses LR including a tracking loss and a feeder loss that are set for each terminal type (step S211). The reception antenna gain Gr and the various losses LR including the tracking loss and the feeder loss are included in, for example, the reception device information stored in the environmental parameter setting unit 613. It is conceivable that the reception antenna gain Gr and the various losses LR including the tracking loss and the feeder loss are stored as the reception device information for each terminal type, and the reception device information corresponding to a designated terminal type is used.

The parameter determination unit 616 calculates reception power Si=Pti+La+Lr+LR+Ld+Gr at the regulation point of each beam (step S212). When i_main is a beam having the largest reception power Si at the regulation point, the parameter determination unit 616 calculates the SINR by using Si/(Ip+N) on the basis of the reception power Si (i=i_main) calculated in step S212, total reception power Ip=ΣSi (i≠i_main) of beams other than i_main, and noise power N (step S213). The noise power N is included in, for example, the reception device information stored in the environmental parameter setting unit 613.

The above processing is implemented by software that simulates each of the transmission unit 23 of the communication repeater 2, the reception device 4, and the transmission path between the communication repeater 2 and the reception device 4.

Among the functional units described above, a functional unit performed by digital processing is configured by software having a configuration with a matched quantization bit rate. A functional unit performed in normal analog processing holds analog characteristics as a database. When the characteristics of the amplifier 235 are obtained in the RF characteristic calculation unit 615, the output power and the output phase with respect to the input power are obtained from the evaluation frequency and the temperature acquired by communication called the telemetry.

The repeater control device 6 stores the excitation coefficient and the gain adjustment value obtained as described above, and transmits, as beam pattern information obtained when the excitation coefficient and the gain adjustment value are set, a position represented by latitude and longitude of the regulation point and the gain at the regulation point, as the control value calculation response, to the communication control device 5. When the control value is transmitted as the control value setting request from the communication control device 5, the repeater control device 6 transmits the stored excitation coefficient and gain adjustment value to the communication repeater 2 as the control value setting command. The communication repeater 2 stores the excitation coefficient and the gain adjustment value, which are the control values, into the storage device 237 via the control unit 24, and sets the excitation coefficient in the excitation coefficient multiplication unit 231 and sets the gain adjustment value in the gain adjustment unit 232.

FIG. 11 is a graph for explaining an effect obtained by the wireless communication system 1 illustrated in FIG. 1. As the input power to the amplifier 235 increases, signal power for noise increases, so that the communication quality increases as the input power increases. However, in a case where the amplifier 235 is a non-linear amplifier, non-linear distortion occurs in proportion to the input power when the input power becomes equal to or more than a certain value, and the communication quality is deteriorated. By repeating a process of calculating the evaluation value of the communication quality of when a gain adjustment value a_{g} is gradually decreased from a value that causes the input power to an extent that the non-linear distortion occurs, it is possible to obtain the gain adjustment value a_{g}=A with which the evaluation value exceeds the threshold T_{q} of the communication quality. For example, when the evaluation value of the communication quality is calculated in a state of the gain adjustment value a_{g}=0, the calculated evaluation value is equal to or less than the threshold T_{q}. Therefore, the gain adjustment value a_{g} is decreased and set to the gain adjustment value a_{g}=-1. When the evaluation value is calculated again in this state, since the evaluation value is still equal to or less than the threshold T_{q}, the processing of calculating the evaluation value by further decreasing the gain adjustment value a_{g} is repeated, and the evaluation value exceeds the threshold T_{q} when the gain adjustment value a_{g}=A.

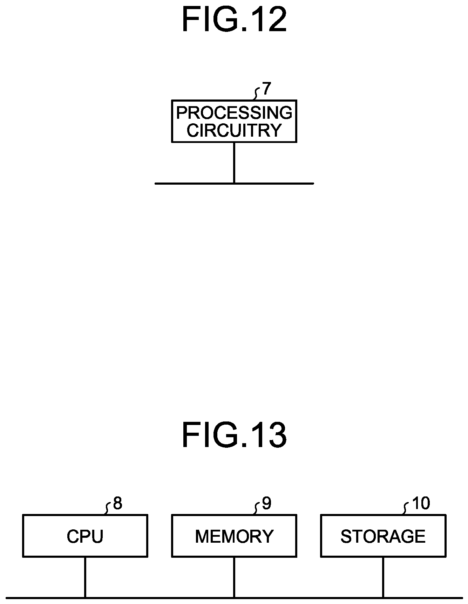

The individual functions of the communication repeater 2, the transmission device 3, the reception device 4, the communication control device 5, and the repeater control device 6 illustrated in FIG. 1 may be implemented by a dedicated circuit, or may be implemented by a control circuit such as a central processing unit (CPU) that executes a program. In the case of being implemented by the dedicated circuit, the individual functions of the communication repeater 2, the transmission device 3, the reception device 4, the communication control device 5, and the repeater control device 6 are implemented as processing circuitry 7 as illustrated in FIG. 12. FIG. 12 is a diagram illustrating dedicated hardware for implementing each function of the wireless communication system 1 illustrated in FIG. 1. The processing circuitry 7 illustrated in FIG. 12 is a single circuit, a composite circuit, a programmed processor, a parallel programmed processor, an application specific integrated circuit (ASIC), a field programmable gate array (FPGA), or a combination of these.

FIG. 13 is a diagram illustrating a hardware configuration for implementing each function of the wireless communication system 1 illustrated in FIG. 1 by using a CPU. Each function of the wireless communication system 1 can be implemented by using a CPU 8, a memory 9, and a storage 10. The CPU 8 is a control circuit, and is also called an arithmetic device, a microprocessor, a microcomputer, a digital signal processor (DSP), or the like. The memory 9 and the storage 10 are a nonvolatile or volatile semiconductor memory such as a random access memory (RAM), a read only memory (ROM), a flash memory, an erasable programmable ROM (EPROM), or an electrically EPROM (EEPROM, registered trademark), a magnetic disk, a flexible disk, an optical disk, a compact disk, a mini disk, a digital versatile disk (DVD), or the like.

The CPU 8 reads and executes a program stored in the memory 9 or the storage 10 to implement each function of the wireless communication system 1. A part of the functions of the wireless communication system 1 may be implemented by using a dedicated circuit, and a part thereof may be implemented by using a program and a CPU. Further, a way of dividing the functional blocks illustrated in FIGS. 3, 4, 5, and 7 is an example, processing performed by a plurality of functional blocks may be implemented by one piece of the processing circuitry 7 or one program, or processing performed by one functional block may be implemented by a plurality of pieces of the processing circuitry 7 or a plurality of programs. Note that the program executed by the CPU 8 may be provided in a state of being stored in a storage medium, and the program may be read from the storage medium and stored in the memory 9 or the storage 10, or the program provided via a communication path such as the Internet may be downloaded to the memory 9 or the storage 10.

As described above, the communication repeater 2 according to the first embodiment has a beamforming function and relays a wireless communication signal including communication data addressed from the transmission device 3 to the reception device 4, and the repeater control device 6 controls the communication repeater 2. The repeater control device 6 includes the parameter determination unit 616 that determines a gain adjustment value for adjusting input power to the amplifier 235 that amplifies the wireless communication signal relayed by the communication repeater 2, on the basis of an evaluation value indicating communication quality in the reception device 4. The evaluation value is calculated on the basis of: state information indicating a state of the communication repeater 2; a beam pattern requested when the communication repeater 2 transmits the wireless communication signal to the reception device 4; transmission path information indicating a state of a transmission path between the communication repeater 2 and the reception device 4; and reception device information indicating a state of the reception device 4. Therefore, the gain is adjusted such that the communication quality in the reception device 4 becomes a desired value, and a transmission power level can be adjusted on the basis of the communication quality of the entire wireless communication system 1 without excessively setting a back-off margin. In addition, by performing such setting at a design stage, wasteful use of the high-performance amplifier 235 becomes unnecessary, and the hardware cost can be reduced.

Note that, in the first embodiment, an example in which the evaluation value is a signal-to-noise ratio has been described. Further, in the first embodiment, the parameter determination unit 616 sequentially performs processing of calculating the evaluation value and determining the gain adjustment value in response to the control value calculation request. This parameter determination unit 616 calculates the evaluation value while changing the gain adjustment value, and obtains the gain adjustment value with which the calculated evaluation value satisfies a predetermined condition. In the first embodiment, the predetermined condition is to exceed a predetermined threshold, and the parameter determination unit 616 repeats changing the gain adjustment value and comparing the evaluation value with the threshold until the evaluation value exceeds the threshold. More specifically, the parameter determination unit 616 provisionally sets the gain adjustment value, calculates the excitation coefficient so as to maximize the total emission power when the set gain adjustment value is used, and repeats changing the gain adjustment value and calculating the excitation coefficient until the condition is satisfied by the evaluation value when the provisionally set gain adjustment value and the calculated excitation coefficient are used.

Note that, in the first embodiment, the control value calculation request transmitted from the communication control device 5 includes, as a control condition, information indicating a position of the regulation point and an upper limit and a lower limit of the gain at the regulation point. The parameter determination unit 616 determines the gain adjustment value such that the gain at the position of the regulation point included in the received control value calculation request falls within a range of the upper limit and the lower limit included in the control value calculation request.

Further, according to the first embodiment, it is possible to provide the wireless communication system 1 including: the transmission device 3 that converts communication data addressed to the reception device 4 into a wireless communication signal and transmits the wireless communication signal; the communication repeater 2 that relays the wireless communication signal transmitted from the transmission device 3 and transmits the wireless communication signal to the reception device 4; the reception device 4 that receives the wireless communication signal from the communication repeater 2 and converts the wireless communication signal into communication data; and the repeater control device 6 that controls the communication repeater 2. Note that, in the first embodiment, the communication repeater 2 is a communication satellite.

Furthermore, according to the first embodiment, it is possible to provide a control value determination method for determining a control value for controlling the communication repeater 2 that has a beamforming function and relays a wireless communication signal including communication data addressed from the transmission device 3 to the reception device 4. This control value determination method may include: a step of determining a gain adjustment value that is a control value for adjusting input power to the amplifier 235 that amplifies the wireless communication signal relayed by the communication repeater 2, on the basis of an evaluation value indicating communication quality in the reception device 4. The evaluation value is calculated on the basis of: state information indicating a state of the communication repeater 2; a beam pattern requested when the communication repeater 2 transmits the wireless communication signal to the reception device 4; transmission path information indicating a state of a transmission path between the communication repeater 2 and the reception device 4; and reception device information indicating a state of the reception device 4. Note that, in the first embodiment, the control value determination method further includes a step of calculating an evaluation value in response to the control value calculation request, and a step of determining a gain adjustment value on the basis of the calculated evaluation value, and these steps are performed by the repeater control device 6.

### Second Embodiment.

In the first embodiment, the repeater control device 6 uses the SINR as the evaluation value of the communication quality. However, in a second embodiment, an example will be described in which error vector magnitude (EVM) is used as an evaluation value of communication quality.

In the second embodiment, a configuration of the wireless communication system 1 is as illustrated in FIG. 1. The second embodiment is different from the first embodiment in an operation in which the parameter determination unit 616 of the repeater control value generation unit 61 of the repeater control device 6 calculates an evaluation value, and other parts are similar to those in the first embodiment, and thus a detailed description thereof is omitted here. Note that, constituent elements of the second embodiment will be described with reference numerals identical to those in the first embodiment.

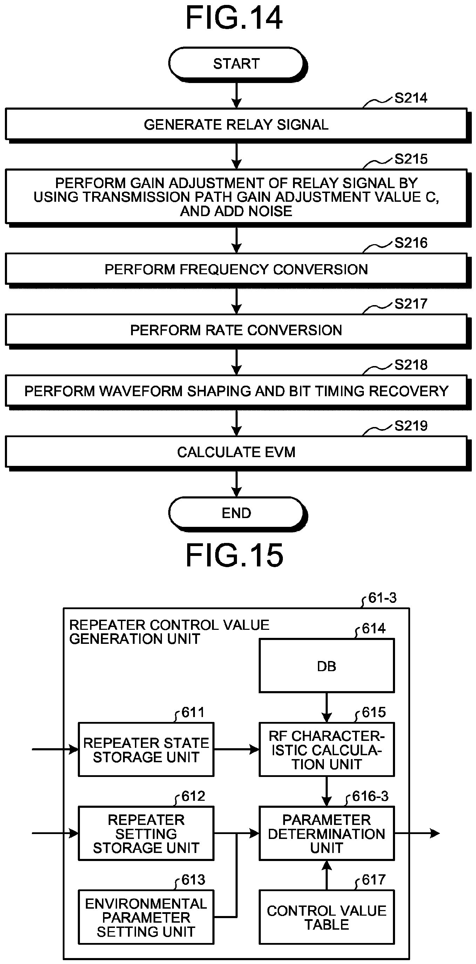

FIG. 14 is a flowchart for explaining a specific example of a method for calculating an evaluation value by the parameter determination unit 616 according to the second embodiment. The operation illustrated in FIG. 14 is a specific example of step S204 in FIG. 9, and illustrates a case where the evaluation value is the EVM.

The parameter determination unit 616 generates a relay signal by using a function that simulates a transmission path from the transmission device 3 to the communication repeater 2 for a wireless communication signal transmitted from the transmission device 3 and simulates the reception unit 21, the switch 22, and the transmission unit 23 in the communication repeater 2 (step S214) .

Subsequently, by executing processing similar to steps S209 to S211 in FIG. 10, the parameter determination unit 616 calculates the atmospheric absorption loss La, the rainfall attenuation amount Lr, the distance attenuation amount Ld, the various losses LR for each terminal type, and the reception antenna gain Gr, and calculates a transmission path gain adjustment value C=La+Lr+LR+Ld+Gr by using these values. The gain adjustment of the relay signal is performed using the calculated transmission path gain adjustment value C, and a reception signal is calculated by adding noise of the noise power N (step S215). The parameter determination unit 616 extracts a symbol of the reception signal by performing frequency conversion which is reception processing (step S216), performing rate conversion (step S217), and performing waveform shaping and bit timing recovery (step S218). The parameter determination unit 616 calculates the EVM by comparing the extracted symbol of the reception signal with ideal signal point arrangement of a modulation scheme included in a parameter that is set in step S201 of FIG. 9 (step S219). The EVM is obtained by squaring a difference between the reception signal point position and the ideal signal point arrangement, and dividing the result by a square root. Since lower EVM indicates better communication quality, in a case where the EVM is used as the evaluation value, step S205 may use "the evaluation value falls below the threshold", or whether or not the evaluation value exceeds the threshold may be determined using the reciprocal of the EVM as the evaluation value.

As described above, in the wireless communication system 1 according to the second embodiment, the EVM is used as the evaluation value. Therefore, the communication quality can be calculated at a waveform level of the wireless communication signal, and more detailed optimization can be performed.

### Third Embodiment.

In the first and second embodiments, the control value is sequentially calculated in response to the control value calculation request transmitted in step S101 of FIG. 2. In a third embodiment, the repeater control device 6 holds in advance a table in which calculated results are associated with a control condition. Further, in the control value calculation in step S102 of FIG. 2, the repeater control device 6 extracts a control value corresponding to the control condition included in the control value calculation request from the table, and transmits the extracted control value as the control value calculation response in step S103.

FIG. 15 is a diagram illustrating a configuration of a repeater control value generation unit 61-3 according to the third embodiment. In the third embodiment, a configuration of the wireless communication system 1 is similar to that of the first embodiment, and a configuration of each device included in the wireless communication system 1 is similar to that of the first embodiment except that the repeater control device 6 includes the repeater control value generation unit 61-3 illustrated in FIG. 15 instead of the repeater control value generation unit 61. Therefore, reference numerals identical to those in the first embodiment are used. Hereinafter, differences from the first embodiment will be mainly described.

In addition to the configuration of the repeater control value generation unit 61, the repeater control value generation unit 61-3 further includes a control value table 617 in which a control condition and a gain adjustment value, which is a control value, are associated with each other. In addition, instead of the parameter determination unit 616, the repeater control value generation unit 61-3 includes a parameter determination unit 616-3 that determines a gain adjustment value, which is a control value, by using the control value table 617. In response to the control value calculation request, the parameter determination unit 616-3 extracts a gain adjustment value corresponding to the control condition included in the control value calculation request from the control value table 617, and outputs the extracted gain adjustment value. Here, the control value table 617 includes, for example, an evaluation frequency and regulation point information which are the control condition, and an evaluation value, an excitation coefficient, and a gain adjustment value associated with the control condition.

As described above, according to the third embodiment, it is no longer necessary to sequentially calculate the evaluation value and the parameter, and thus, it is possible to improve a response speed to the control value calculation request.

### Fourth Embodiment.

In the first to the third embodiments described above, a condition used for determining the gain adjustment value is set to "the evaluation value is equal to or more than the threshold", and it is determined whether or not the desired communication quality is satisfied by comparing the evaluation value of the communication quality with the predetermined threshold. In a fourth embodiment, an example will be described in which this condition is set to "the evaluation value of the communication quality is maximized".

In this case, the parameter determination unit 616 searches for a gain adjustment value with which the evaluation value is maximized while changing the gain adjustment value. For example, the parameter determination unit 616 can search for the gain adjustment value with which the evaluation value is maximized, by using an annealing method.

The parameter determination unit 616 uses the temperature and the gain adjustment value as variables, sets a sufficiently high value as an initial value of the temperature, and sets a value with which the evaluation value becomes sufficiently low as an initial value of the gain adjustment value. Then, the parameter determination unit 616 calculates the evaluation value of the communication quality by using the initial value of the temperature and the initial value of the gain adjustment value, and sets the calculated evaluation value as a variable to store the maximum value of the evaluation value. Thereafter, the parameter determination unit 616 decreases the gain adjustment value by 1 each time a processing step is advanced while decreasing the temperature, calculates the evaluation value each time, and compares the calculated evaluation value with the value set as the variable to store the maximum value of the evaluation value. When the calculated evaluation value is larger than the value set as the variable, the parameter determination unit 616 updates the maximum value of the evaluation value by setting the calculated evaluation value as the variable, and determines whether to stochastically adopt the maximum value as the maximum communication quality in the step, by using a probability based on the temperature. The parameter determination unit 616 repeats the above operation a predetermined number of times. Note that the operation described here is an example, and the search for the gain adjustment value can be implemented by using another global optimum algorithm.

As described above, since the parameter determination unit 616 searches for the maximum value of the evaluation value searchingly instead of using threshold determination, it is possible to obtain the gain adjustment value capable of further improving the communication quality without falling into the local optimum. In the fourth embodiment, it is not necessary to set a threshold provided for the evaluation value in advance.

The configurations illustrated in the above embodiments illustrate one example and can be combined with another known technique, and it is also possible to combine embodiments with each other and omit and change a part of the configuration without departing from the subject matter of the present disclosure.

For example, in the above embodiments, a larger evaluation value indicates better communication quality, but it is possible to use an evaluation value indicating better communication quality as the evaluation value is smaller. In this case, in the above embodiments, "the evaluation value exceeds the threshold" may be read as "the evaluation value falls below the threshold", and "the evaluation value is maximum" may be read as "the evaluation value is minimum".

### Reference Signs List

1 wireless communication system; 2 communication repeater; 3 transmission device; 4 reception device; 5 communication control device; 6 repeater control device; 7 processing circuitry; 8 CPU; 9 memory; 10 storage; 21 reception unit; 22 switch; 23 transmission unit; 24 control unit; 61, 61-3 repeater control value generation unit; 62 repeater control value setting unit; 231, 231-1 to 231-n excitation coefficient multiplication unit; 232, 232-1 to 232-n gain adjustment unit; 233, 233-1 to 233-n multiplexing unit; 234, 234-1 to 234-n DAC; 235, 235-1 to 235-n amplifier; 236, 236-1 to 236-n antenna element; 611 repeater state storage unit; 612 repeater setting storage unit; 613 environmental parameter setting unit; 614 DB; 615 RF characteristic calculation unit; 616, 616-3 parameter determination unit; 617 control value table.

## Claims

1. A repeater control device for controlling a communication repeater that relays a wireless communication signal including communication data addressed from a transmission device to a reception device, the communication repeater having a beamforming function, the repeater control device comprising:
a parameter determination unit to determine a gain adjustment value for adjusting input power to an amplifier, the amplifier amplifying the wireless communication signal relayed by the communication repeater, based on an evaluation value indicating communication quality in the reception device and calculated based on: state information indicating a state of the communication repeater; a beam pattern requested when the communication repeater transmits the wireless communication signal to the reception device; transmission path information indicating a state of a transmission path between the communication repeater and the reception device; and reception device information indicating a state of the reception device.

2. The repeater control device according to claim 1, wherein the evaluation value is a signal-to-noise ratio.

3. The repeater control device according to claim 1, wherein the evaluation value is an error vector magnitude.

4. The repeater control device according to any one of claims 1 to 3, wherein the parameter determination unit sequentially performs processing of calculating the evaluation value and determining the gain adjustment value in response to a control value calculation request.

5. The repeater control device according to claim 4, wherein the parameter determination unit calculates the gain adjustment value with which the evaluation value satisfies a predetermined condition while changing the gain adjustment value.

6. The repeater control device according to claim 5, wherein the parameter determination unit provisionally sets the gain adjustment value, calculates an excitation coefficient for forming a beam of the beam pattern requested to the communication repeater so as to maximize total emission power when the set gain adjustment value is used, and repeats changing the gain adjustment value and calculating the excitation coefficient until the predetermined condition is satisfied by the evaluation value when the provisionally set gain adjustment value and the calculated excitation coefficient are used.

7. The repeater control device according to claim 5 or 6, wherein
the predetermined condition is that the evaluation value exceeds a threshold that is predetermined, and
the parameter determination unit repeats changing the gain adjustment value and comparing the evaluation value with the threshold until the evaluation value exceeds the threshold.

8. The repeater control device according to claim 5 or 6, wherein
the predetermined condition is that the evaluation value is maximized, and
the parameter determination unit searches for the gain adjustment value with which the evaluation value is maximized while changing the gain adjustment value.

9. The repeater control device according to any one of claims 1 to 3, further comprising:
a control value table in which the gain adjustment value is associated with a control condition, the gain adjustment value being determined in advance based on the evaluation value so as to satisfy the control condition included in a control value calculation request, wherein
in a case where the control value table stores the gain adjustment value corresponding to the control condition included in the control value calculation request, in response to the control value calculation request, the parameter determination unit extracts and outputs the gain adjustment value stored in the control value table.

10. The repeater control device according to claim 4, wherein
the control value calculation request includes information indicating, as a control condition, a position of a regulation point and an upper limit and a lower limit of a gain at the regulation point, and
the parameter determination unit determines the gain adjustment value such that the gain at the position of the regulation point included in the control value calculation request falls within a range of the upper limit and the lower limit.

11. A wireless communication system comprising:
the transmission device to convert communication data addressed to the reception device into the wireless communication signal, and transmit the wireless communication signal;
the communication repeater to relay the wireless communication signal transmitted from the transmission device, and transmit the wireless communication signal to the reception device;
the reception device to receive the wireless communication signal from the communication repeater, and convert the wireless communication signal into the communication data; and
the repeater control device according to any one of claims 1 to 10.

12. The wireless communication system according to claim 11, wherein the communication repeater is a communication satellite.

13. The wireless communication system according to claim 11 or 12, further comprising:
a communication control device to control communication between the transmission device and the reception device, wherein
the repeater control device determines the gain adjustment value based on a control value calculation request transmitted by the communication control device.

14. A control circuit for controlling a repeater control device that controls a communication repeater that relays a wireless communication signal including communication data addressed from a transmission device to a reception device, the communication repeater having a beamforming function, the control circuit causing the repeater control device to execute:
a step of determining a gain adjustment value for adjusting input power to an amplifier, the amplifier amplifying the wireless communication signal relayed by the communication repeater, based on an evaluation value indicating communication quality in the reception device and calculated based on: state information indicating a state of the communication repeater; a beam pattern requested when the communication repeater transmits the wireless communication signal to the reception device; transmission path information indicating a state of a transmission path between the communication repeater and the reception device; and reception device information indicating a state of the reception device.

15. A storage medium storing a program for controlling a repeater control device that controls a communication repeater that relays a wireless communication signal including communication data addressed from a transmission device to a reception device, the communication repeater having a beamforming function, the program causing the repeater control device to execute:
a step of determining a gain adjustment value for adjusting input power to an amplifier, the amplifier amplifying the wireless communication signal relayed by the communication repeater, based on an evaluation value indicating communication quality in the reception device and calculated based on: state information indicating a state of the communication repeater; a beam pattern requested when the communication repeater transmits the wireless communication signal to the reception device; transmission path information indicating a state of a transmission path between the communication repeater and the reception device; and reception device information indicating a state of the reception device.

16. A control value determination method for determining a control value for controlling a communication repeater that relays a wireless communication signal including communication data addressed from a transmission device to a reception device, the communication repeater having a beamforming function, the control value determination method comprising:
a step of determining a gain adjustment value that is the control value for adjusting input power to an amplifier, the amplifier amplifying the wireless communication signal relayed by the communication repeater, based on an evaluation value indicating communication quality in the reception device and calculated based on: state information indicating a state of the communication repeater; a beam pattern requested when the communication repeater transmits the wireless communication signal to the reception device; transmission path information indicating a state of a transmission path between the communication repeater and the reception device; and reception device information indicating a state of the reception device.
